# EUROPEAN PATENT APPLICATION

(11) **EP 2 750 357 A1**
(43) Date of publication of application: **02.07.2014**
(21) Application number: 12306700.1
(22) Date of filing: 28.12.2012
(51) Int. Cl.: H04L 29/08

(54) **Content delivery to a user in a mobile network**

(71) Applicant: Alcatel Lucent, 75007 Paris (FR)
(72) Inventor: Feki, Afef, 91620 Nozay (FR); Sayadi, Bessem, 91620 Nozay (FR)
(74) Representative: El Manouni, Josiane

(57) **Abstract**

In an embodiment, there is provided a method for content delivery to an user in a mobile network, a method wherein:
- said content is pre-loaded in at least one mobile network node, referred to as caching node, having a location determined based on knowledge of said user's location at a time where said user will consume said content.

## Description

The present invention generally relates to mobile networks and systems.

Detailed descriptions of mobile networks and systems can be found in the literature, such as in particular in Technical Specifications published by standardisation bodies such as for example 3GPP (3^{rd} Generation Partnership Project).

In such systems, a mobile terminal (also called User Equipment) has access to various mobile services (such as IP-based services), over a mobile network (such as mobile network providing IP connectivity). Examples of such services include content delivery services, such as in particular video content delivery services. Examples of mobile networks include LTE (Long Term Evolution) networks. A mobile network generally has a cellular structure and comprises network nodes such as in particular Base Stations via which mobile terminals have access to the network.

Content delivery over mobile networks is challenging for mobile network operators, given the explosion of user data traffic, the limited mobile network resources, and the requirements of Quality of Expeience for mobile network usres.

There is a need to improve content delivery services (such as in particular video content delivery services) over mobile networks, In particular there is a need to find new ways of providing such services, that would be beneficial from both users' and mobile network operators' point of view.

Embodiments of the present invention in particular address such needs.

These and other objects are achieved, in one aspect, by a method for content delivery to an user in a mobile network, a method wherein:
- said content is pre-loaded in at least one mobile network node, referred to as caching node, having a location determined based on knowledge of said user's location at a time where said user will consume said content.

These and other objects are achieved, in other aspects, by different entities configured for performing such method. Such entities may include, in particular, user equipment, mobile network node (such as base station), mobile network server providing content delivery services.

Some embodiments of apparatus and/or methods in accordance with embodiments of the present invention are now described, by way of example only, and with reference to the accompanying drawings, in which:
- figure 1 is intended to illustrate, in a simplified way, an example of mobile system wherein embodiments of the present invention may be used,
- figure 2 is intended to illustrate an example of improvement to content delivery services, according to an embodiment of the present invention.

Data traffic to mobile wireless devices is predicted to increase by two orders of magnitude in the next few years. This explosive demand is fuelled mainly by demand for delivery of video content to Internet-capable smartphones and other devices.

One of the most promising way to achieve data throughput increase of such tremendous scale is a decrease in cell size, leading to deployment of dense small cells. However, the effectiveness of this approach is often impaired by the lack of cost-effective backhaul connectivity of these small base stations to the cellular operator network.

Content downloading is an alternative to streaming media content delivery. Content downloading offers an alternative content delivery mechanism for mobile devices. Such mechanism can be optimized to push content to individual mobile devices in a controlled fashion, enabling it to be stored on these devices for a potential future consumption by end-users.In particular, such mechanism can be optimized to enable traffic offloading by seamlessly and opportunistically pushing personalized and targeted content onto individual end-user devices, and to use network idle periods and choose alternative, cost-effective fixed wireless networks (for example, Wi-Fi or femto systems) instead of 3G networks.

In such optimized downloading mechanism, the network may ask the user if he wants to receive his content later or immediately. No deadline may be fixed by the users. Thus, the network may specify what content can be downloaded, the order in which it can be downloaded, when it should be downloaded, what access technology should be used, and where each media asset is available in the network. The content may be pushed directly in the user terminal. Typically such mechanism may be be activated in the night when the network load is very low.

Embodiments of the present invention enable to still enhance such optimized downloading mechanism.

Embodiments of the present invention propose to place a set of storage points in fixed locations/points with a set of predefined properties within the considered network coverage. Embodiments of the present invention propose to place the content in the storage location (for example the nearest one to the end user) according to the deadline, corresponding to its consumption by the user, and the location. In embodiments of the persent invention, it is supposed that the user indicates to the network his interest in this content to be consumed in a certain place and at a certain hour.

Embodiments of the present invention leverage the limited backhaul bandwidth and the bottleneck of the radio access network, especially in the case of dense deployment of cells.

Embodiments of the present invention propose a cooperative user procedure where the network knows in advance the request of the user. And in some cases, the network can know the location where the already requested content will be consumed.

In an optimized downloading mechanism (as mentioned above), the content is pushed and stored locally in the terminal. To fix the content to be pushed, some profiling is realized on the behavior of the user. In another realization, when the user asks for example to consume content, the network can ask him if he accepts to postpone his consumption. In this case, the network applies the smartloading technique.

An optimized downloading mechanism (as mentioned above) is based on caching the content in the memory of the terminal. Nevertheless, if the battery of the terminal is critical, it is more advantageous to pre store the content in another/some location (i.e. fixed part of the network) in a future location area where the user will consume the content (to leverage the backhaul limitation rate). In particular for such reason, embodiments of the present invention introduce the notion of location in addition to the deadline of the content consumption. A typical example for this: a user asks the network to download his emails before boarding in the plane at a certain hour. In this example, the network should respect the deadline of predefined hour. The location is also predefined, since the network should store the requested content in some storage location covering the airport.

Embodiments of the present invention propose that the network reacts in a proactive manner for serving the users requests (not all the users of course): meaning that the network has the knowledge of when and where it starts downloading the user's requested content and delivering it to the concerned user.

If the network does not have such information (location and deadline), the network will serve the user upon its initiation of the request (in reactive manner). For typical best effort IP traffic like video on demand on Hulu platform, the satisfaction of the user experience will be dependent on the current state of the radio network access and the state of the backhaul. The network will exploit only the classical tools that it has like interference cancellation, optimization of radio resources, protocol like DiffServ ...etc to reach the targeted quality of experience.

In embodiments of the present invention, to optimize the radio resource management and maximize the quality of experience of the user, a part of the user traffic will be managed in a proactive way by exploiting the location and the deadline of the user's request in advance.

This could be done similarly as in the case of an optimized downloading mechanism (as mentioned above) where the network asks the user if he wants to be delivered later. Here, the question will be: could you specify a deadline for your request and where you want to be delivered similarly to a classical mail.

Such interaction could generate a new business model where the operator could reduce the monthly cost of the user subscription if the user specifies, for a part of his traffic, a deadline and a location.

As another solution to determine these information, one can exploit the usage of a user of the mobile networks. Statistically, the user performs some repetitive behavior in his consumption. For example, each time waiting in the metro station the user asks for the news via his favorite website.

The user may also declare to the network operator that he has subscription to some podcast or flash. Thus, the network could know in advance the content that will be consumed by a certain user in a certain location at a certain time.

In embodiments of the present invention, a wireless network is aware of the agenda of content consumption of user k (generally a part and not all his traffic). The agenda is not exhaustive. It contains only the best effort traffic. For example, a user k may tell the network that he wants to watch the movie B at 20h on his mobile in CDG airport.

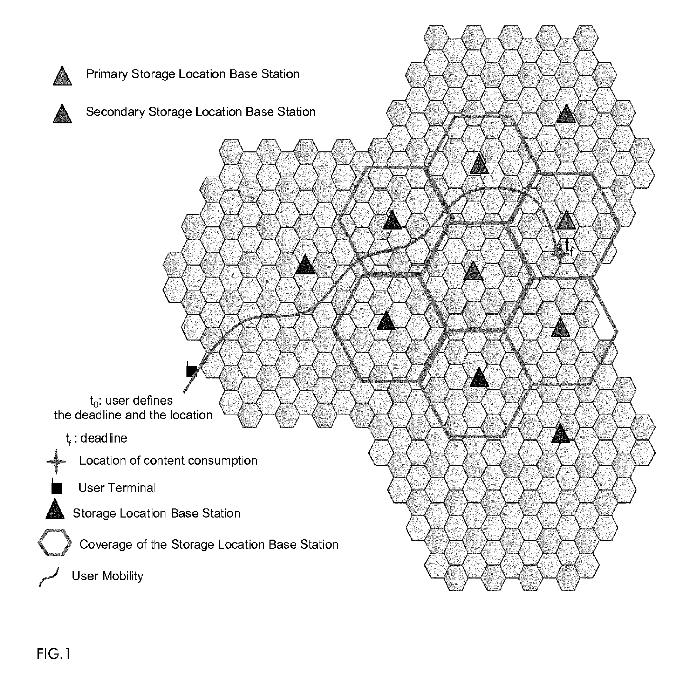

Embodiments of the present invention define Storage Location Base Stations (SLBS) placed in fixed positions in the network (as is depicted in Figure 1 for example) and assumed to have large storage capacity, high-bandwidth wireless communication capabilities (serving the users even in the same technology like LTE, or another technology like 3G or IEEE802.11). Adding to that, these storage location base stations can have low-rate backhaul links which can be wired or wireless, which make their installation as easier as possible to the operator.

These caches may cover a set of small cells in order to minimize the mobility issues and to preserve the quality of the content delivery compared to the case where the caches are plugged in each small base station.

Concerning the connectivity, the user may be attached mainly to the small cells network. To retrieve its content from the SLBS, a kind of multi-homing may be implemented as is the case in 3GPP between cellular network and IEEE802.11 network.

The distance between Storage locations (SLBS) may impact the way of how the user is served (for example, in case of deployment of plenty of storage locations, e.g. the distance between two SLBS is small, the user can access to two or more storage locations in the same time)

These Storage location base stations can cache a prefetched content resulting from the proactive delivery (upon the request of the users) according to embodiments of the present invention. These Storage Location Base stations may cache popular content in addition.

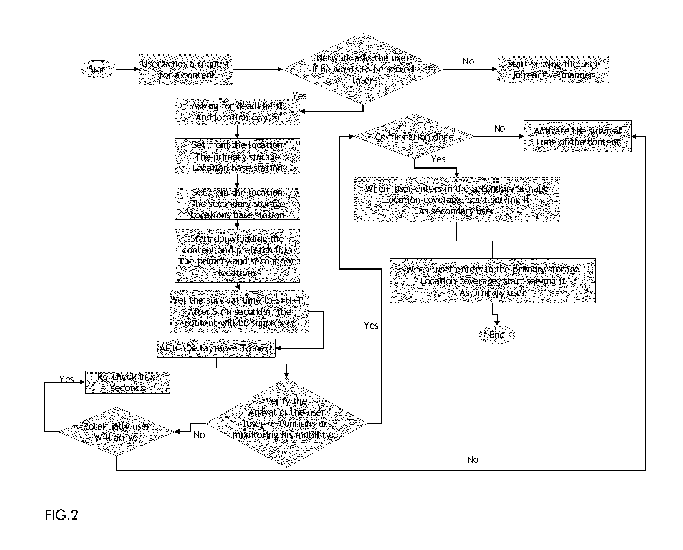

An example of improvement to content delivery services according to an embodiment of the present invention is illustrated in figure 2.

Formally, mobile terminal k indicates at *t*₀ the content that he is going to consume or to request at a given time *t_{f}* and at a given location identified by the coordinate (x,y,z) or by the name of the location or the address or pre-stored connectivity to SLBS,... (see Figure 1).

Following steps may be provided, as illustrated in Figure 2:
1. At *t*₀, the user send a request to the network.
2. The network asks the user if he wants to be served later.
3. If yes, the network asks the deadline tf and the location (x,y,z), for example.
4. Network will set the Primary Storage Location (PSL) and the Secondary Storage Location (SSL) according to the location. We call as PSL the storage location that will serve the user at the indicated location (typically the nearest storage location to the location of the content consumption). All the other storage locations perceived by the user in this final trajectory (near the indicated final location) are called as Secondary Storage Locations SSL. The SSL is equivalent to the neighboring base station of the PSL.
5. Before the deadline *t*₀, the network asks the user to confirm his request and thus the user will be in time in the predefined location.
6. If user is not reachable (terminal is off), the network continue checking the relevance of the request during a predefined period.
7. If user changes his request (e.g. the user will not be in the predefined location), set the survival time denoted by S, for the prefetched content: this is very important to optimize the network resources usage thanks to a potential reuse of the already downloaded content to respond to another user request. If there is enough content reuse, i.e. many users are requesting the same content, caching can replace backhaul communication.
8. If the user reconfirms his request, the user will be served as secondary user when he will be in the coverage of the secondary storage location; which will correspond in reality to lower scheduling priority in these base stations comparing to the other 'conventional' users.
9. User will be served as primary user when the user is in the coverage of the primary Storage location.

A parameter A may determine the time when the network starts checking the relevance of the request of user k.

Embodiments of the invention may not be applied for all locations. For example, the operator will have interest to activate it in locations where the traffic is very loaded such us university campus, airport, dense urban area,...

In one aspect, there is provided a method for content delivery to an user in a mobile network.

Various embodiments are provided, which may be used alone or in combination, according to various combinations.

In an embodiment:
- said content is pre-loaded in at least one mobile network node, referred to as caching node, having a location determined based on knowledge of said user's location at a time where said user will consume said content.

In an embodiment, said method comprises:
- selecting said at least one caching node, based on knowledge of said user's location.

In an embodiment, said method comprises:
- pre-loading said content in said at least one caching node, before said time where said user will consume said content, based on knowledge of said time.

In an embodiment, said method comprises:
- said user's equipment sending to a server in said mobile network, in addition to a request for delivery of said content, information enabling to determine said location.

In an embodiment, said method comprises:
- said user's equipment sending to a server in said mobile network, in addition to a request for delivery of said content, information enabling to determine said time.

In an embodiment, said method comprises:
- said user's equipment sending to a server in said mobile network, information enabling to determine said location, in response to a question from said server further to a request from said user's equipment for delivery of said content.

In an embodiment, said method comprises:
- said user's equipment sending to a server in said mobile network, information enabling to determine said time, in response to a question from said server further to a request from said user's equipment for delivery of said content.

In an embodiment, said method comprises:
- a mobile network server asking to said user's equipment information enabling to determine said location, in response to a request from said user's equipment for delivery of said content.

In an embodiment, said method comprises:
- a mobile network server asking to said user's equipment information enabling to determine said time, in response to a request from said user's equipment for delivery of said content.

In an embodiment, said method comprises:
- said caching node delivering said content to said user's equipment.

In an embodiment:
- said caching node includes a mobile network Base Station having storage capabilities.

In an embodiment:
- said at least one mobile network node include a mobile network node referred to as primary mobile network node, serving said user's equipment at said location, and at least one mobile network node referred to as secondary mobile network node, neighboring said primary mobile network node and serving said user's equipment at a location neighboring said location.

Other aspects relate to different entities configured for performing such method. Such entities may include, in particular, user equipment, mobile network node (such as base station), mobile network server.

The detailed implementation of such entities does not raise any special problem for a person skilled in the art, and therefore does not need to be more fully disclosed, for a person skilled in the art.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for content delivery to an user in a mobile network, a method wherein:
- said content is pre-loaded in at least one mobile network node, referred to as caching node, having a location determined based on knowledge of said user's location at a time where said user will consume said content.

2. A method according to claim 1, comprising:
- selecting said at least one caching node, based on knowledge of said user's location.

3. A method according to claims 1 or 2, comprising:
- pre-loading said content in said at least one caching node, before said time where said user will consume said content, based on knowledge of said time.

4. A method according to any of claim 1 to 3, comprising:
- said user's equipment sending to a server in said mobile network, in addition to a request for delivery of said content, information enabling to determine said location.

5. A method according to any of claims 1 to 4, comprising:
- said user's equipment sending to a server in said mobile network, in addition to a request for delivery of said content, information enabling to determine said time.

6. A method according to any of claims 1 to 5, comprising:
- said user's equipment sending to a server in said mobile network, information enabling to determine said location, in response to a question from said server further to a request from said user's equipment for delivery of said content.

7. A method according to any of claims 1 to 6, comprising:
- said user's equipment sending to a server in said mobile network, information enabling to determine said time, in response to a question from said server further to a request from said user's equipment for delivery of said content.

8. A method according to any of claims 1 to 7, comprising:
- a mobile network server asking to said user's equipment information enabling to determine said location, in response to a request from said user's equipment for delivery of said content.

9. A method according to any of claims 1 to 8, comprising:
- a mobile network server asking to said user's equipment information enabling to determine said time, in response to a request from said user's equipment for delivery of said content.

10. A method according to any of claims 1 to 9, comprising:
- said at least one caching node delivering said content to said user's equipment.

11. A method according to any of claims 1 to 10, wherein:
- said at least one caching node includes a mobile network Base Station having storage capabilities.

12. A method according to any of claims 1 to 11, wherein:
- said at least one mobile network node include a mobile network node referred to as primary mobile network node, serving said user's equipment at said location, and at least one mobile network node referred to as secondary mobile network node, neighboring said primary mobile network node and serving said user's equipment at a location neighboring said location.

13. An User Equipment configured for performing a method according to any of claims 1 to 12.

14. A mobile network server, configured for performing a method according to any of claims 1 to 12.

15. A mobile network node such as Base Station, configured for performing a method according to any of claims 1 to 12.
